# EUROPEAN PATENT APPLICATION

(11) **EP 1 086 866 A1**
(43) Date of publication of application: **28.03.2001**
(21) Application number: 99203131.0
(22) Date of filing: 23.09.1999
(51) Int. Cl.: B60S 1/66

(54) **On-board vehicle wash system**

(71) Applicant: Carragher, John, Castleblaney, Co. Monaghan (IE)
(72) Inventor: Carragher, John, Castleblaney, Co. Monaghan (IE)
(74) Representative: Hanna, Peter William Derek

(57) **Abstract**

An on-board vehicle wash system is provided comprising a tank (5) for containing a supply of washing water adapted to be mounted on the vehicle (1), a tank outlet (8), a filling inlet (7), terminating in hose connection nozzles (11, 10) accessible from the vehicle exterior, and means (9) such as a D.C. pump to supply washing water under pressure via the outlet to the connection nozzle. A standard hose (13) is fitted to the nozzles (11, 10). In a bus or coach, the tank (5) may he mounted in a dead space (4) defined below the saloon or cargo bay floor level, between the wheel wells, preferably of the rear wheel wells (3), of the vehicle (1) above the vehicle chassis.

## Description

The present invention relates to a self-contained on-board vehicle wash system, in particular to a system for washing down the external surfaces of heavy goods vehicles, buses and coaches, when on the road.

Vehicle operators have a concern that their fleet of road vehicles are kept as clean as possible so as to be well-presented when seen on the road, at the end of a journey at a customers premises, or by passengers in the case of a bus or coach operator. Vehicles which become dirty in transit or are not kept clean present a bad image of the operator, and advertising matter displayed on the vehicle exterior may become obscured. It is particularly important for coach tour operators to maintain a high level of cleanliness for coaches in their fleet, but there are practical difficulties.

Operators may have their own large vehicle wash systems in use at a base location, but these are few and far between at service stations on public highways. At present, coach operators may provide their drivers with cleaning equipment such as a hose, buckets, and long handle brushes for washing down the exterior surfaces of the coach where a public water supply is available, away from base. Such an operation may have to be carried out in a public car park, or at the rere of a hotel premises, for example, which is inconvenient. Often, when a coach needs to be cleaned when away from base, neither a large vehicle wash facility nor a public water supply for hosing down, is available.

Accordingly, the present invention addresses these problems by providing a completely self-contained vehicle wash system with its own on-hoard water supply and hose which may be used at any suitable location, and which may be retrofitted to a heavy goods vehicle, coach or bus, in the manner described.

The present invention therefore provides an on-board vehicle wash system comprising a tank for containing a supply of washing water adapted to he mounted on the vehicle, a tank outlet terminating in a hose connection nozzle accessible from the vehicle exterior, and means to supply washing water under pressure via said outlet to said connection nozzle.

The supply means is preferably a D.C. pump connected to the vehicle's D.C. battery power supply. Alternatively, the pumping means has its own battery power supply, which may be rechargeable, or may be a mechanical pump powered indirectly by the vehicle's drive shaft, when idling.

The tank is most preferably adapted to be mounted in a dead space over the vehicle's chassis. The said dead space may be defined below the saloon or cargo hay floor level, between the wheel wells, preferably of the rear wheels, in the case of a bus or coach.

A washing water supply filling inlet may be provided, communicating with the tank, and conveniently terminating in a hose connection nozzle accessible from the vehicle exterior, most preferably adjacent to the outlet hose connection nozzle. A plurality of outlet/inlet connection nozzles may be provided, at least on opposite sides of the vehicle.

An access compartment closable by a door at the vehicle exterior may he provided to contain said outlet/inlet connection nozzles. A stowaway reel containing a hose adapted for connection to said nozzles is most preferably provided.

The present invention also provides a road vehicle, most preferably a heavy goods vehicle, coach or bus, when fitted with said on-board vehicle wash system.

A preferred embodiment of the on-board vehicle wash system, adapted for a single deck touring coach, will now be described with reference to the accompanying drawings, in which
Figure 1 is a perspective view of an on-board wash system installed and in use with in the coach, and
Figure 2 is a schematic view, to an enlarged scale, of the tank, pump and inlet/outlet arrangement of the vehicle wash system illustrated in Figure 1.

Referring to the drawings, a single deck coach 1 of conventional design includes a luggage compartment 2 under the saloon floor, and in this compartment between the rear wheel wells 3, there is normally an empty " dead space" 4 which may be used for luggage, but is generally difficult to access. It is within this space 4 that a water tank 5 may conveniently be mounted, above the vehicle chassis, and preferably standing on a frame 6. The tank is preferably made of plastics material, such as PVC, and may for example be of 236 litres (52 gallons) capacity. The frame 6 is preferably made of mild steel.

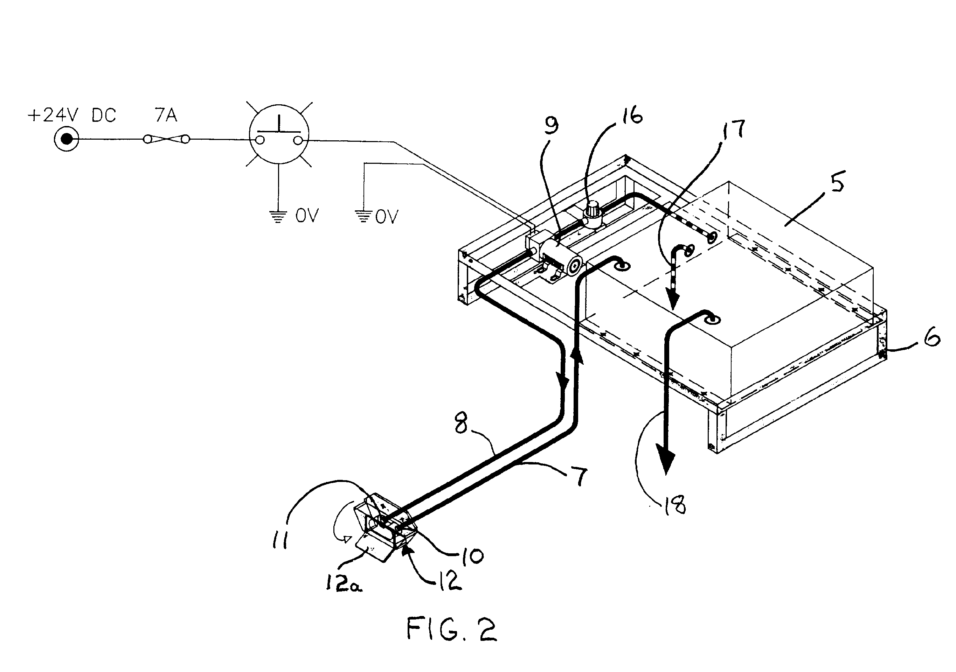

An inlet pipe 7 is connected to the top of the tank for filling this with a supply of wash water. An outlet pipe 8 is connected to the base, or near the base, of the tank 5, and to a pump 9. This arrangement is more clearly illustrated in Figure 2.

The inlet pipe 7 terminates in a hose connection nozzle 10 and the outlet pipe 8 terminates in a hose connection nozzle 11, which nozzles are housed in an access compartment 12 with an access door 12a formed in the vehicle exterior body.

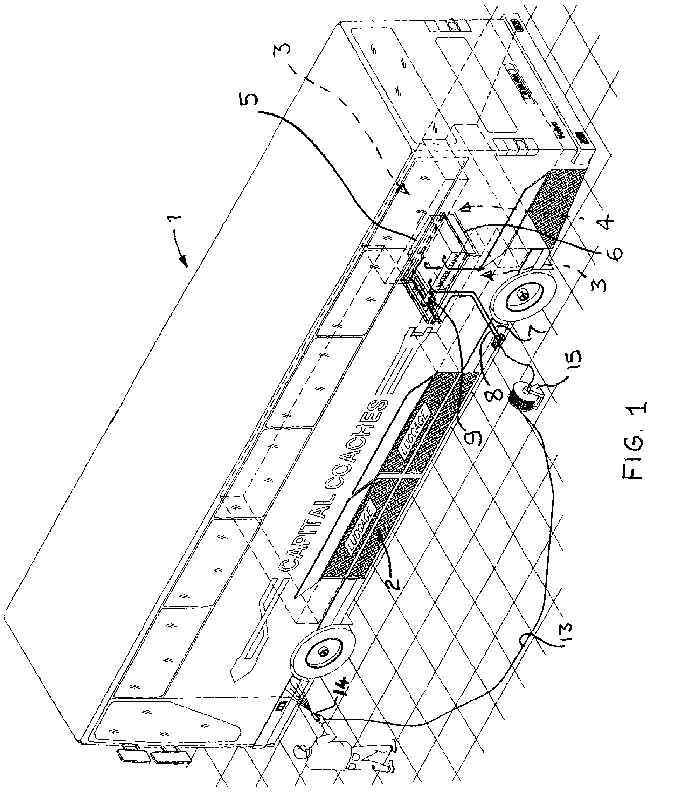

In use, as shown in Figure 1, a hose is connected to the inlet nozzle 10 to fill the tank 5 from a water supply. When it is desired to wash the exterior bodywork of the coach, the hose is connected to the outlet nozzle 11 and the pump 9 is switched on to provide water pressure at the hose outlet 14. The hose 13 is conveniently kept on a reel 15 which may be stowed away in the luggage compartment of the coach or in a separate compartment. For convenience more than one hose inlet connection nozzle 10 and/or hose outlet connection nozzle 11, may be provided, for example on opposite sides of the coach 1. Thus, the driver of the coach may wash down his vehicle at any convenient road side location, and the tank may be refilled at any public water supply. The tank 5 is preferably designed to hold a three-day supply of washing water, enough for several washing operations.

The pump 9 may be operated continually to provide sufficient water pressure, or the raising of the water tank by the frame 6 by a sufficient height can provide gravity feed, to be supplemented by the pump 9 when necessary. For example, the pump 9 may be a 24 volt D.C. pump with a built in start-up when line pressure in the outlet pipe 8 falls below a certain level. A water filter 16 is also preferably provided in the outlet pipe 8. A drain pipe 17 may be provided, connected at or near the base of the tank 5. Likewise, an overflow pipe 18 may be provided, connected at or near the top of the tank 5. The overflow pipe 18 provides a simple means of telling when the tank 5 is full, during filling, as overflow water will be seen to leak out under the vehicle. The inlet and outlet connection nozzles 10, 11 are preferably standard quick-release hose fittings.

It will be appreciated that modifications may be made to the system as described above, for example the tank 5 may be compartmentalised, with one compartment for a washing solution and one compartment with a rinsing solution. Means may be provided to heat the water in the tank, and/or introduce anti-freeze solution. In certain vehicles, it may be possible to mount the tank 5 at a height further above the vehicle chassis so as to dispense with the need for a pump and make use of gravity feed.

## Claims

1. An on-board vehicle wash system comprising a tank (5) for containing a supply of washing water adapted to be mounted on the vehicle (1), a tank outlet (8) terminating in a hose connection nozzle (11) accessible from the vehicle exterior, and means (9) to supply washing water under pressure via said outlet to said connection nozzle.

2. A vehicle wash system according to claim 1, wherein the supply means (9) is a D.C. pump connected to the vehicle's D.C. battery power supply.

3. A vehicle wash system according to claim 1, when the supply means (9) is a mechanical pump powered indirectly by the vehicle's drive shaft, when idling.

4. A vehicle wash system according to claim 1, wherein the supply means (9) is provided by gravity feed.

5. A vehicle wash system according to any one of claims 1 to 4, wherein the tank (5) is mounted in a dead space (4) defined below the saloon or cargo bay floor level, between the wheel wells, preferably of the rear wheels (3), of the vehicle (1) above the vehicle chassis.

6. A vehicle wash system according to any one of claims 1 to 5, further comprising a washing water supply filling inlet (7) communicating with the tank, and terminating in a hose connection nozzle (10) accessible from the vehicle exterior.

7. A vehicle wash system according to claim 6, comprising a plurality of outlet/inlet hose connection nozzles (11, 10), at least on opposite sides of the vehicle (1).

8. A vehicle wash system according to claim 6 or claim 7, further comprising an access compartment (12) closable by a door (12a) at the vehicle exterior, for containing said outlet/inlet hose connection nozzles (11, 10).

9. A road vehicle, being a heavy goods vehicle, coach or bus, when fitted with an on-board vehicle wash system, as claimed in any one of claims 1 to 8.
